(19) Europäisches Patentamt

European Patent Office

Office européen des brevets

(11) **EP 1 091 044 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(51) Int Cl.$^7$: **E01B 5/02**

(21) Anmeldenummer: **00119775.5**

(22) Anmeldetag: **11.09.2000**

(54) **Kontaktflächen zwischen Schiene und Rad**

Contact surface between a rail and the wheel of a railway vehicle

Surface de contact entre un rail et la roue d'un véhicule ferroviaire

(84) Benannte Vertragsstaaten:
**AT BE CH CY DE DK ES FI FR GB GR IE IT LI LU MC NL PT SE**

(30) Priorität: **10.09.1999 DE 19943487**

(43) Veröffentlichungstag der Anmeldung:
**11.04.2001 Patentblatt 2001/15**

(73) Patentinhaber: **Deutsche Bahn AG**
**10365 Berlin (DE)**

(72) Erfinder: **Nicklisch, Dirk**
**80639 München (DE)**

(74) Vertreter: **Zinken-Sommer, Rainer**
**Deutsche Bahn AG**
**Patentabteilung TZ 02**
**Völckerstrasse 5**
**80939 München (DE)**

(56) Entgegenhaltungen:
**EP-A- 0 446 879       EP-A- 0 529 271**
**DD-A- 206 764         US-A- 2 056 729**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 091 044 B1

**Beschreibung**

Die Erfindung betrifft Kontaktflächen zwischen einer Eisenbahnschiene und einem darauf fahrenden Rad eines Radpaares (z.B. Radsatz) eines Schienenfahrzeuges sowie ein Verfahren zu deren Herstellung, wobei die in den jeweils als Berührpunkt idealisierten momentanen Kontaktflächen wirksamen Rollradien $r_1$, $r_2$ der beiden korrespondierenden Räder in Abhängigkeit von der Verschiebung y des Radsatzes quer zum Gleis eine gemäß den jeweiligen Anforderungen des Betriebseinsatzes gewünschte, vom Fachmann vorgegebene Funktion der Rollradiendifferenz zwischen linkem und rechtem Rad $\Delta r = r_1 - r_2 = f(y)$ erfüllen.

Die Geometrie des Rad-Schiene-Kontaktes bestimmt wesentlich das Fahrverhalten der Schienenfahrzeuge und beeinflußt gleichzeitig den Verschleiß der Berührpartner entscheidend. Die fahrtechnische Beurteilung einer Rad-Schiene-Profilpaarung erfolgt z. Zt. im wesentlichen auf der Grundlage der $\Delta r$-Funktion, aus der zwei Beurteilungskriterien zur Kennzeichnung der Fahrstabilität und des Bogenlaufverhaltens abgeleitet werden:

I) Fahrstabilität (äquivalente Konizität):

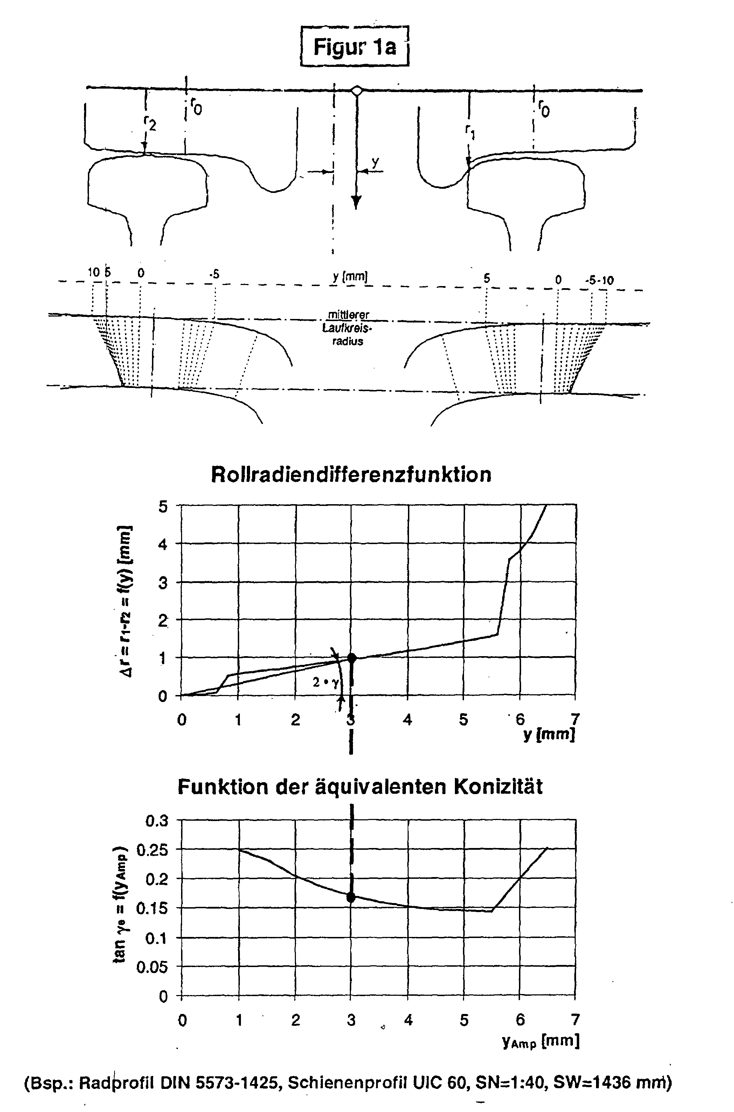

Die in Abhängigkeit von der Radsatzstellung im Gleis unterschiedlichen aktuellen Rollradien bewirken den bekannten Wellenlauf (s. g. "Sinuslauf") der Radsätze, der für das Schienenfahrzeug eine von der Fahrgeschwindigkeit abhängige Selbsterregung darstellt. Zur Charakterisierung dieser Eigenschaft des Rad-Schiene-Systems dient die mathematische Ersatzgröße "äquivalente Konizität" $\tan \gamma_e$, die bei der Deutschen Bahn AG mit Hilfe der "Klingel-Gleichung" aus der amplitudenabhängigen Wellenlänge der durch numerische Integration der kinematischen Bewegungsgleichung gewonnenen Bahnkurve des Radsatzes berechnet wird (vgl. z.B. Nefzger, Bergander: "Das Zusammenwirken von Rad und Schiene" in AET 42, 1987, S. 93ff). Die äquivalente Konizität $\tan \gamma_e = f(y_{Amp})$ stellt somit eine Linearisierung der Funktion der Rollradiendifferenz $\Delta r = f(y)$ für eine bestimmte Linearisierungsamplitude $y_{Amp}$ dar (siehe Fig 1a). Je steiler die $\Delta r$-Funktion verläuft, desto größer ist also die äquivalente Konizität. Für ein Schienenfahrzeug, das sich mit konstanter Fahrgeschwindigkeit fortbewegt, bedeutet eine Vergrößerung der äquivalenten Konizität eine Erhöhung der Wellenlauffrequenz der Radsätze und einen stärkeren Eintrag von Schwingungsenergie, was ab einem fahrzeugspezifischen kritischen $\tan \gamma_e$-Wert dazu führt, daß die Radsatzquerbewegung im Gleis nicht mehr abklingt. Die Radsätze bewegen sich statt dessen unter wechselseitigem Spurkranzanlauf im sog. Zick-Zack-Lauf (Grenzzykel), wobei extrem hohe Bauteilbeanspruchungen sowohl am Fahrzeug als auch am Fahrweg auftreten. Diese als "Fahrinstabilität" bekannte Erscheinung muß im Betriebseinsatz unbedingt vermieden werden.

II) Bogenlaufverhalten (kleinster, kinematisch rollend durchfahrbarer Bogenradius):

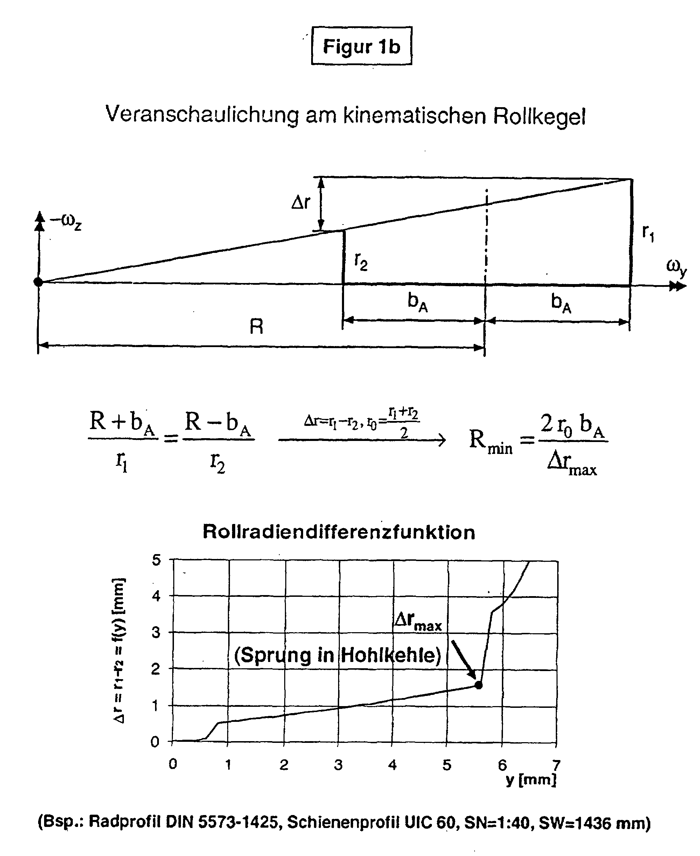

Ferner ist die Funktion der Rollradiendifferenz $\Delta r = f(y)$ auch für das Fahrverhalten im Gleisbogen von großer Bedeutung. Aufgrund der Drehzahlkopplung der beiden Räder eines Radsatzes ist das beanspruchungsarme und komfortable Durchfahren auch engerer Gleisbögen nur möglich, wenn eine ausreichend große Rollradiendifferenz zwischen bogenäußerem und bogeninnerem Rad eines Radpaares vorhanden ist. Nur dann können die unterschiedlich langen Wege, die die beiden Räder im Bogen zurückzulegen haben, ausgeglichen werden und der Radsatz auf dem "kinematischen Rollkegel" abrollen. Ist dies nicht gewährleistet, kommt es zur Fehleinstellung des Radsatzes bis hin zum Spurkranzanlauf des führenden Rades, wobei in der Kontaktfläche große Relativgeschwindigkeiten verbunden mit großen Kräften zwischen Rad und Schiene auftreten, was zu unruhigem Fahrverhalten und starkem Verschleiß der Kontaktpartner führt. Als Beurteilungsgröße für die Bogenfreundlichkeit einer Rad-Schiene-Profilpaarung dient vor allem der kleinste, kinematisch rollend durchfahrbare Bogenradius $R_{min}$, der sich mit Hilfe des kinematischen Rollkegels aus der $\Delta r$-Funktion ergibt, siehe Fig. 1b (vgl. auch Roland Müller: "Die Problematik der Berührgeometrie Rad/Schiene", ZEV + DET Glas. Ann. 118, 1995, 3, S. 86ff).

Bisher wurden die $\Delta r$-Funktion und die Funktion der äquivalenten Konizität für vorgegebene (bestehende) bzw. experimentell ermittelte Rad- und Schienenprofile bestimmt und überprüft, ob die Beurteilungskennwerte in einem aus der Erfahrung bekannten akzeptablen Bereich lagen. War dies nicht der Fall, wurde durch geeignete Instandhaltungsmaßnahmen (Reprofilierung) die Soll-Profilgeometrie wieder hergestellt. Die $\Delta r$-Funktion sowie die daraus abgeleiteten Größen äquivalente Konizität und kleinster, kinematisch rollend durchfahrbarer Bogenradius stellten somit bisher reine Beurteilungskriterien für Rad-Schiene-Profilpaarungen dar.

Vor allem der Hochgeschwindigkeitsverkehr, der in Deutschland aufgrund der komplizierten Topographie auch auf Neubaustrecken nur mit einem relativ hohen Bogenanteil realisiert werden kann, stellt für die Ermittlung einer geeigneten Rad-Schiene-Profilpaarung eine große Herausforderung dar. Bisher versuchte man, mit Standardprofilen dieses Problem zu lösen.

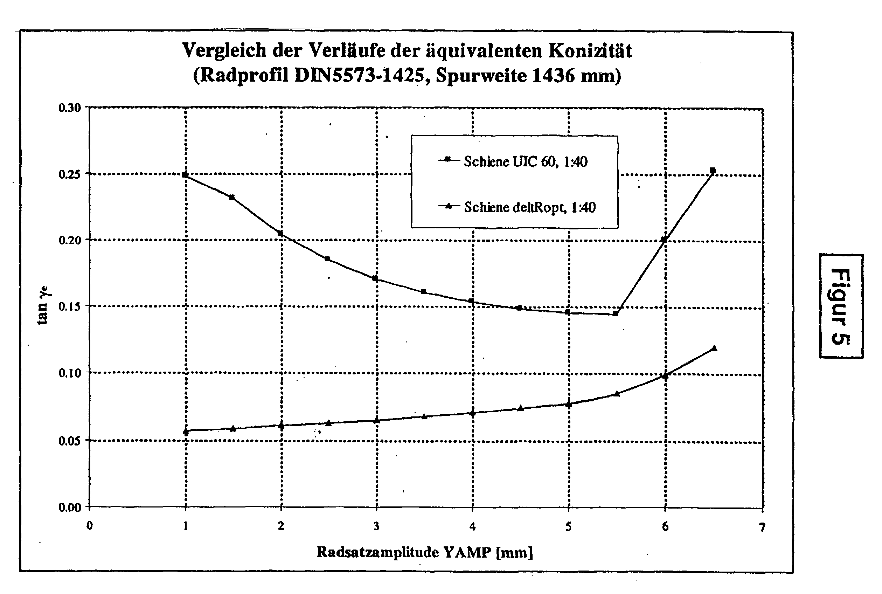

Die derzeitige Rad-Schiene-Standardprofilpaarung der DB AG - Radprofil DIN 5573 - E 1425 (entspricht UIC-ORE-Einheitsprofil S1002 mit Nennspurmaß 1425 mm), Schienenkopfquerprofil UIC 60 mit Einbauneigung 1:40 - kann die gestiegenen Anforderungen jedoch nicht mehr in jeder Hinsicht erfüllen. Während die Bogenlaufeigenschaften noch akzeptabel sind, ist vor allem die äquivalente Konizität, die bereits im Neuzustand bei der Nennspurweite von 1436 mm tan $\gamma_e(y_{Amp}$ = 3 mm) 0,17 beträgt (vgl. Fig. 5), für den Hochgeschwindigkeitsverkehr mit v > 280 kmlh unerwünscht hoch. Dies ist unter anderem darauf zurückzuführen, daß das bisher übliche, durch aneinandergereihte Kreisbögen beschriebene UIC 60-Schienenkopfquerprofil Bereiche aufweist, die aufgrund der starken sprunghaften Krümmungsänderungen die geometrischen Kontaktbedingungen nicht erfüllen. Dadurch kommt es zu sog. Berührpunktsprüngen, die sich als Unstetigkeitsstellen in der $\Delta$r-Funktion widerspiegeln und das Fahrverhalten ungünstig beeinflussen.

Aus der EP-B1-0 446 879 ist eine Eisenbahnschiene mit Verschleißprofil bekanntgeworden, bei der das Ausgangsprofil des Schienenkopfes an den Fahrkanten je einen Krümmungsradius hat, dessen Länge 1/13 bis 1/17 der Länge des Krümmungsradius der Lauffläche im Schienenkopfmittenbereich beträgt. Diese Ausgestaltung nimmt jedoch auf die Auswirkungen des Rad-Schiene-Kontaktes bezüglich des Fahrverhaltens des Schienenfahrzeuges keine Rücksicht.

Aus der DE-A-41 24 913 (EP-A-0 529 271) sind Kontaktflächen von Gleisbauteilen mit Rädern von Schienenfahrzeugen bekanntgeworden, bei denen die Krümmungsdifferenz $\Delta$k innerhalb eines speziellen Bereiches konstant ist oder daß aufeinanderfolgende Kontaktflächen eine sich stetig ändernde Krümmungsdifferenz aufweisen. Ein sich stetig ändernder Krümmungsverlauf beschreibt jedoch lediglich den bekannten, leicht meßbaren Verschleißzustand abgefahrener Schienen. Dies zeigt sich z.B. anhand des aus dem radienbeschriebenen UIC 60-Neuprofil hervorgegangenen verschlissenen Schienenkopfprofils "MWWF", das Mitte der 90er Jahre auf der Basis zahlreicher Schienenprofilmessungen auf dem Neubaustreckenabschnitt Würzburg-Fulda als repräsentatives mittleres Schienenkopfquerprofil bestimmt wurde (vgl. z.B. Walenta, Haigermoser: "Berührgeometrie von Rad und Schiene - Neue Methoden zur Untersuchung und Optimierung" in ZEV + DET Glas. Ann. 121, 1997, 2/3, S. 245ff). Außerdem zielt die beschriebene Ausbildung der Geometrie von Gleisbauteilen ausschließlich auf eine Verbesserung der Kontaktverhältnisse hinsichtlich der Materialbeanspruchungen ab, ohne die fahrtechnischen Belange der Rad-Schiene-Berührungsgeometrie zu berücksichtigen.

Die Aufgabe der Erfindung besteht also darin, durch eine optimale Ausgestaltung der Rad-Schiene-Profilpaarung einerseits die notwendige Fahrstabilität bei hohen Geschwindigkeiten sicherzustellen und andererseits ein komfortables sowie schlupf- und somit verschleißarmes Durchfahren auch engerer Gleisbögen zu ermöglichen.

Diese Aufgabe wird erfindungsgemäß durch Kontaktflächen mit den Merkmalen des Patentanspruches 1 sowie das Verfahren nach Patentanspruch 6 gelöst. Vorteilhafte Weiterbildungen ergeben sich aus den Unteransprüchen.

Die Erfindung geht davon aus, daß die wesentlichen berührgeometrischen Eigenschaften einer Rad-Schiene-Profilpaarung durch die Funktion $\Delta$r = $r_1$ - $r_2$ = f(y), also die Differenz zwischen den Rollradien des rechten und linken Rades in Abhängigkeit der Querverschiebung des Radsatzes um einen Betrag y, festgelegt werden, wobei vor allem der Bereich der Radsatzquerbewegung bis zum Spurkranzanlauf, das heißt innerhalb des Spurspiels -$y_{SP} \leq y \leq y_{Sp}$, der fahrtechnisch bedeutungsvollste ist (bei der DB-Standardprofilpaarung beträgt das Spurspiel im Nennzustand bei-spielsweise $2 \cdot y_{SP} \approx$ Spurweite - Spurmaß = 11 mm). Wählt man nun anhand der konkreten Betriebsanforderungen einen Sollverlauf der $\Delta$r-Funktion, so kann man daraus unter Vorgabe der Profilkontur eines geeigneten Kontaktpartners die Profilkontur des zweiten, die $\Delta$r-Funktion erfüllenden Kontaktpartners berechnen.

Für eine auf den Hochgeschwindigkeitsverkehr abgestimmte Profilpaarung ist die $\Delta$r-Funktion so zu festzu-legen, daß diese im Bereich der im geraden Gleis üblichen Radsatzquerauslenkung von ca. y = ± 3 mm $\approx y_{SP}$/2 relativ flach verläuft, also niedrige Werte der äquivalenten Konizität und somit eine hohe Fahrstabilität ergibt. Dies ist die Voraussetzung für die Erzielung eines guten Fahrkomforts und zur Gewährleistung eines niedrigen Niveaus der dynamischen Rad-Schiene-Kräfte. Im Bereich größerer Querbewegungen soll die $\Delta$r-Funktion einen deutlichen, aber stetigen Anstieg aufweisen (Forderung nach stetiger Differenzierbarkeit), so daß vor dem Berührpunktsprung in die Spurkranzflanke ($|y| \geq y_{SP}$) eine ausreichend große Rollradiendifferenz $\Delta r_{max}$ aufgebaut werden kann, die für gutes Fahrverhalten im Gleisbogen notwendig ist. Auf diese Weise können auch engere Gleisbögen komfortabel und verschleißarm durchfahren werden. Den vorzugebenden Sollverlauf der $\Delta$r-Funktion erhält man daher beispielsweise durch Vorgabe von drei charakteristischen Punkten für die Radsatzquerauslenkungen von y = 0, y = $y_{SP}$/2 und y = $y_{SP}$, wobei mit den $\Delta$r-Werten bei y = $y_{SP}$/2 die äquivalente Konizität tan $\gamma_e$ bzw. bei y = $y_{SP}$ die maximale Rollradien-differenz $\Delta r_{max}$ und somit der kleinste, kinematisch rollend befahrbare Bogenradius $R_{min}$ festlegt werden. Anschließend legt man mit Hilfe eines geeigneten Interpolationsverfahren eine stetige, im wesentlichen monoton steigende Kurve durch diese Punkte. Dabei ist die Bedingung $\Delta r(y=y_{SP}) > 2 \cdot \Delta r(y=y_{SP}/2)$ einzuhalten, wodurch lineare $\Delta$r-Funktionen, wie sie beispielsweise bei bekannten Profilpaarungen mit Kegelradprofilen entstehen, ausgeschlossen sind. Kegelradprofile sind deswegen nicht geeignet, weil sie bekanntermaßen nicht formstabil sind, was bereits nach sehr kurzen Laufwegen zu veränderten berührgeometrischen Eigenschaften der Profilpaarung führt. Da bei der üblichen Symmetrie der Rad-Schiene-Profilpaarungen rechts/links die $\Delta$r-Funktion stets eine ungerade Funktion darstellt, d. h. f(-y) = -f(y), genügt es im allgemeinen, nur den positiven Ast der $\Delta$r-Funktion vorzugeben. Denkbar sind aber auch asymmetrische Profilpaarungen (insbesondere in Gleisbögen), bei denen auch die $\Delta$r-Funktion asymmetrisch wird und diese dann vollständig, d. h. für positive und negative Radsatzquerauslenkungen y vorgegeben werden muß.

Für die Berechnung von Schienenprofilen werden vorzugsweise geeignete international genormte Radprofile zugrunde gelegt, die es den einzelnen Bahngesellschaften ermöglichen, ihre Fahrzeuge auch auf den Gleisen im Ausland zu betreiben. Die Berechnung von Radprofilen kann beispielsweise auf der Basis durch Messung bestimmter Konturen verschlissener Schienen zur optimalen Anpassung an eine vorhandene Strecke erfolgen. Die durch Kreisbögen beschriebenen UIC-Standardschienenprofile (UIC = Union International des Chemins de Fer) sind aufgrund der Krümmungssprünge im Neuzustand hierfür nur bedingt geeignet.

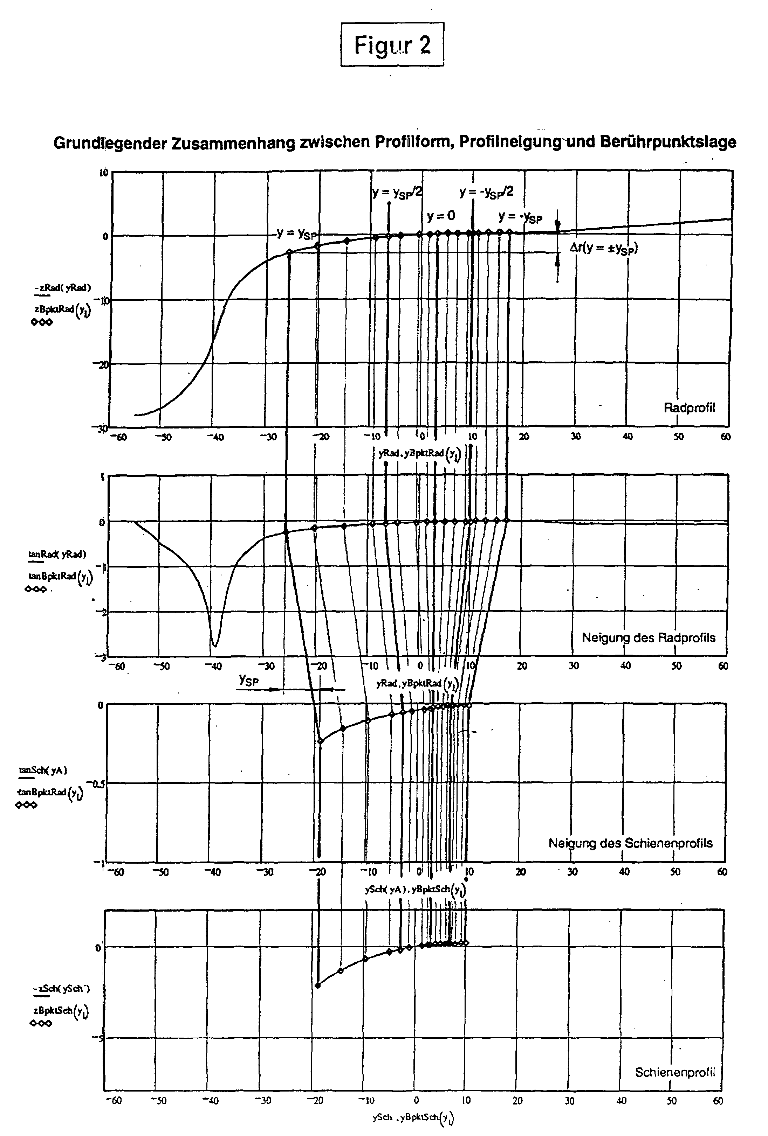

Die Berechnung der passenden Profilkontur des Kontaktpartners erfolgt auf der Grundlage des in Figur 2 dargestellten Zusammenhangs zwischen den Profilformen, den Profilneigungen und den Berührpunkten beim Rad-Schiene-Kontakt. Diese Verknüpfung ergibt sich aus der Berührbedingung, daß die Profilneigungen beider Kontaktpartner im Berührpunkt stets gleich groß sein müssen, da eine Durchdringung der Profilkonturen ausgeschlossen werden muß. Somit kann man aus der Lage eines Berührpunktes auf einem Kontaktpartner direkt auf die Lage und die zugehörige Profilneigung im Berührpunkt auf dem anderen Kontaktpartner schließen. Durch Auswahl von Berührpunktpaaren auf der gegebenen Kontaktfläche, die die vorgegebene Funktion der Rollradiendifferenz $\Delta r = f(y)$ im Bereich des Spurspiels $-y_{Sp} \leq y \leq y_{Sp}$ erfüllen, erhält man den Verlauf der Profilneigung der neuen Kontaktfläche. Die neue Profilkontur ergibt sich schließlich durch Integration des gewonnenen Neigungsverlaufes über die Breite der neuen Kontaktfläche. Während man bei gegebenem Radprofil die Berührpunktpaare, die die $\Delta r$-Funktion erfüllen, sofort festlegen kann, muß man bei gegebenem Schienenprofil iterativ vorgehen, um die gewünschte $\Delta r$-Funktion, die sich erst aus den in den Berührpunkten wirksamen Rollradien des neuen Radprofils ergibt, zu erhalten.

Das Ergebnis dieser Berechnung ist eine Kontaktfläche, die anschließend zu einem vollständigen Schienenkopf- bzw. Radprofil zu ergänzen ist. Hierbei sind ggf. einzuhaltende Randbedingungen wie beispielsweise die oft geforderte Symmetrie des Schienenkopfes und die gewünschte Schienenkopfbreite, aber auch die Einbaubedingungen wie Spurweite, Schieneneinbauneigung und Spurmaß zu berücksichtigen. Das Schienenprofil besitzt stets eine kleinere Kontaktfläche als das Rad, die in Y-Richtung "gestaucht" ist.

Da die erfindungsgemäße Vorgabe einer geeigneten stetigen $\Delta r$-Funktion in Verbindung mit einem stetig gekrümmten Kontaktpartner zwangsläufig eine gleichmäßige Verteilung der Berührpunkte auf Rad und Schiene ergibt, kann man davon ausgehen, daß sowohl der Schienenkopf als auch die Fahrfläche des Rades in einem breiten Bereich gleichmäßig verschleißen, wobei die Form der Profilkonturen und somit die gewünschten berührgeometrischen Eigenschaften der Profilpaarungen auch nach längerem Betriebseinsatz annähernd konstant bleiben. Dadurch können die Standzeiten der Kontaktpartner verlängert und der Instandhaltungsaufwand gesenkt werden.

Nachfolgend wird die Erfindung anhand der begleitenden Zeichnung näher erläutert, wobei die Erfindung nicht auf die dargestellten Ausführungsbeispiele eingeschränkt ist, sondern in der dem Fachmann offensichtlichen Weise abgewandelt werden kann. Dabei zeigen:

Fig. 1a schematische Darstellung des Kontaktbereiches Schiene-Rad in Abhängigkeit von der Querverschiebung y mit den daraus abgeleiteten Funktionen der Rollradiendifferenz $\Delta r = f(y)$ und der äquivalenten Konizität $\tan \gamma_e = f(y_{Amp})$;

Fig. 1b Veranschaulichung des kinematischen Rollkegels und der Rollradiendifferenzfunktion;

Fig. 2 Grundlegender Zusammenhang zwischen Profilform, Profilneigung und Berührpunkten (durch Rauten symbolisiert) beim Rad-Schiene-Kontakt;

Fig. 3 Gegenüberstellung der Profilformen $Z = f(Y)$ des Ausführungsbeispieles mit dem Schienenkopfprofil UIC 60, die wegen der Symmetrie bezüglich der Z-Achse nur zur Hälfte gezeichnet wurden;

Fig. 4 Vergleich der Rollradiendifferenzfunktionen der Schienenkopfprofile aus Fig. 2 bei Paarung mit dem Standardradprofil DIN 5573 - E 1425;

Fig. 5 Gegenüberstellung der zugehörigen Verläufe der äquivalenten Konizität in Abhängigkeit von der Radsatzamplitude $y_{Amp}$ und

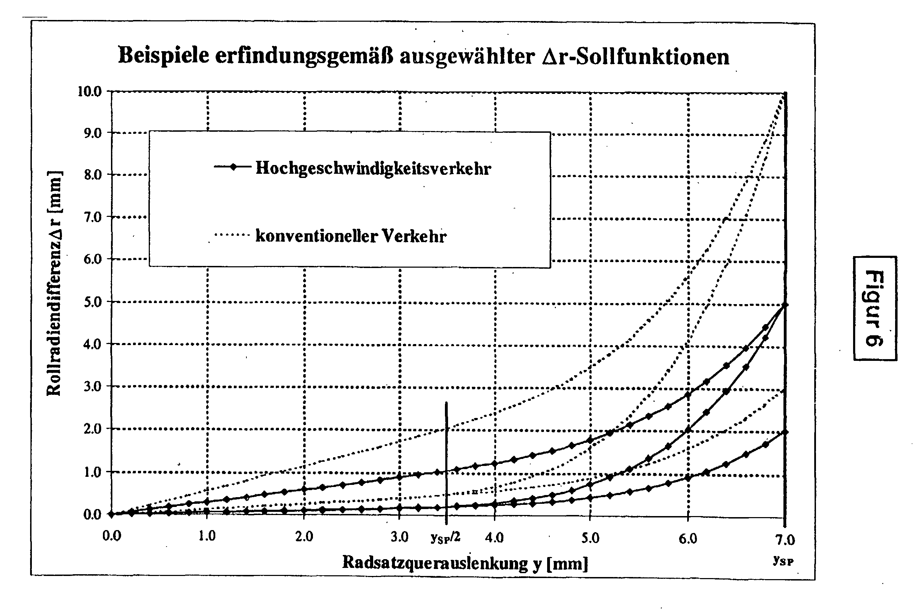

Fig. 6 Beispiele erfindungsgemäß ausgewählter Sollfunktionen der Rollradiendifferenz $\Delta r = f(y)$.

Zunächst soll die bekannte Rad-Schiene-Paarung erläutert werden, da dies für das Verständnis der Erfindung wichtig erscheint.

**Stand der Technik**

In Fig. 1a ist ein gegenüber der strichpunktierten Mittellinie um den Betrag y nach rechts verschobener Radsatz mit dem bekannten Radprofil DIN 5573 - E 1425 bei Kombination mit dem Schienenprofil UIC 60, der Schieneneinbauneigung 1:40 und einer Spurweite von 1436 mm dargestellt. Dabei ist das linke Rad bei $r_2$ im Kontakt mit dem mittleren Bereich des Schienenkopfprofils der linken Schiene, während das rechte Rad bei $r_1$ mit dem inneren Bereich des Schienenkopfes in Kontakt steht. Aufgrund der erkennbaren Berührpunktsprünge ist der Verlauf der Funktion der Rollradiendifferenz $\Delta r = r_1 - r_2$ mit der Verschiebung y unstetig, wie man dem Diagramm der Rollradiendifferenz in Fig. 1a entnehmen kann. Es treten Unstetigkeiten bei geringer Verschiebung (y ≈ 0,6 mm) und bei größerer Verschiebung (y ≈ 5,6 mm, Sprung in Hohlkehle) auf. Diese Sprungstellen wirken sich sowohl auf das Fahrverhalten im geraden Gleis als auch im Gleisbogen ungünstig aus. Aus Fig. 1a bzw. Fig. 5 ist weiterhin ersichtlich, wie sich die äquivalente Konizität der bekannten Schiene (UIC 60, 1:40) unstetig mit großen Änderungen über die Radsatzamplitude $y_{Amp}$ verhält. Die äquivalente Konizität besitzt bei der Linearisierungsamplitude $y_{Amp}$ = 3 mm den Wert tan $\gamma_e$ = 0,17.

**Ausführungsbeispiel 1:**

Nachfolgend wird exemplarisch die Berechnung einer Schienenkontaktfläche für den konventionellen Geschwindigkeitsbereich und bogenreiche Strecken beschrieben:

Zunächst ist eine geeignete $\Delta r$-Funktion festzulegen. Aus dem für den konventionellen Geschwindigkeitsbereich sinnvollen Bereich werden folgende charakteristischen Punkte der $\Delta r$-Funktion vorgegeben:

$$\Delta r(y=0) = 0 \text{ mm}, \; \Delta r(y_{SP}/2=3,5\text{mm}) = 0,5 \text{ mm und } \Delta r(y_{SP}=7\text{mm}) = 3,0 \text{ mm}.$$

Die Punkte wurden so gewählt, daß eine lineare Funktion unter Beachtung der Forderung nach stetiger Differenzierbarkeit von vornherein ausscheidet, da $\Delta r(y_{SP})$ > 2·$\Delta r(y_{SP}/2)$. Die Gleichung einer geeigneten Funktion, die stetig monoton steigend diese ausgewählten Punkte durchläuft, lautet beispielsweise:

$$\Delta r(y) = 0,00991 \; y^3 - 0,02245 \; y^2 + 0,1 \; y.$$

Selbstverständlich können auch beliebige andere, im wesentlichen monoton steigende Funktionen verwendet werden, wie sie dem Fachmann geläufig sind. Die gewählte $\Delta r$-Funktion ist besonders für den Verkehr in kurvenreichen Strecken mit konventionellen Fahrgeschwindigkeiten (v ≤ 160 km/h) geeignet, da sie am Anfang flach verläuft (für diesen Geschwindigkeitsbereich ausreichend niedrige äquivalente Konizität) und bei Ausschöpfung des Spurspiels (y = $y_{SP}$) eine maximale Rollradiendifferenz von $\Delta r_{max}$ = 3 mm vorliegt - d.h. gemäß dem kinematischen Rollkegel können enge Gleisbögen (bis ca. R = 200 m) kinematisch rollend durchfahren werden.

Als Kontaktpartner wird das Radprofil DIN 5573 - E 1425 ausgewählt - also das DB-Standardradprofil.

Nun werden in Abhängigkeit von der Radsatzquerverschiebung y die Berührpunkte auf dem Radprofil ausgewählt, indem zunächst ausgehend von einem willkürlich gewählten Berührpunkt bei Radsatzmittelstellung (y=0), hier $Y_{Rad}$(y=0) 3 mm, die Berührpunkte für negative Radsatzquerauslenkung bis zum Erreichen des gewünschten Spurspiels y = $y_{SP}$ festgelegt werden (hier z.B. nach der festen Beziehung $Y_{Rad}(y) = Y_{Rad}(0) - 2 \cdot y$ für y < 0). Die Berührpunkte für y > 0 ergeben sich schließlich durch Aufsuchen der Punkte auf dem Radprofil, die die vorgegebene Funktion der Rollradiendifferenz, also die Bedingung $Z_{Rad}(y) = \Delta r(y) - Z_{Rad}(Y_{Rad}(-y))$ erfüllen. Damit wird berücksichtigt, daß sich die Rollradiendifferenz aus den wirksamen Rollradien der gegenüberliegenden Räder ergibt und sich bei Querverschiebung des Radsatzes die Berührpunkte auf einem Rad nach innen und auf dem gegenüberliegenden Rad nach außen verlagern.

Anschließend werden die Neigungen des ersten Kontaktpartners, also hier des DIN-Radprofils, für die gewählten Berührpunkte ermittelt. Diese Neigungen in den Berührpunkten müssen gemäß der Berührbedingung gleich den Profilneigungen in den zugeordneten Punkten des zweiten Kontaktpartners sein. Somit ergibt sich der Neigungsverlauf des neuen Schienenprofils aus den in Abhängigkeit von der Radsatzquerauslenkung y gewählten Berührpunkten ($Y_{Rad}(y)$, $Z_{Rad}(y)$) und den zugehörigen Neigungen $\tan_{Rad}(y)$ wie folgt:

$$Y_{Sch}(y) = Y_{Rad}(y) + y, \; \tan_{Sch}(y) = \tan_{Rad}(y),$$

siehe Fig. 2.

Dies entspricht einer Stauchung in Y-Richtung, wodurch die Kontaktflächen von Schienen stets schmaler als die der Räder sind. Mittels Spline-Interpolation o.ä. zwischen diesen Punkten erhält man dann die stetige Neigungsfunktion des neuen Profils.

Die Koordinaten einzelner Punkte des neuen Schienenprofils und damit dessen Form ergeben sich schließlich durch Integration der soeben ermittelten neuen Neigungsfunktion (s. Fig. 2).

Das neue Schienenprofil erfüllt nun bei Paarung mit dem gewählten Radprofil DIN 5573 - E 1425 die oben vorgegebene $\Delta$r-Funktion und die neuen Kontaktpartner besitzen somit die gewünschten fahrtechnischen Eigenschaften hinsichtlich Fahrstabilität und Bogenlaufverhalten.

**Ausführungsbeispiel 2:**

Nachfolgend wird exemplarisch eine Rechnung einer Schienenkontaktfläche für Hochgeschwindigkeitsverkehr beschrieben.

Für die Einbauparameter Spurweite SW = 1436 mm und Schienenneigung 1:40 soll ein Schienenprofil berechnet werden, das sowohl für den Hochgeschwindigkeitsverkehr als auch für relativ enge Bogenradien geeignet ist. Die äquivalente Konizität soll bei tan $\gamma_e$(y$_{Amp}$=3 mm) $\approx$ 0,065 liegen und der kleinste kinematisch rollend befahrbare Bogenradius soll R$_{min}$ $\approx$ 200 m betragen. Daher wird eine erfindungsgemäße $\Delta$r-Funktion mit folgenden charakteristischen Punkten gewählt:

$$\Delta r(y=0) = 0 \text{ mm}, \ \Delta r(y=3mm) = 0,41 \text{ mm und } \Delta r(y=7mm) = 3,17 \text{ mm}.$$

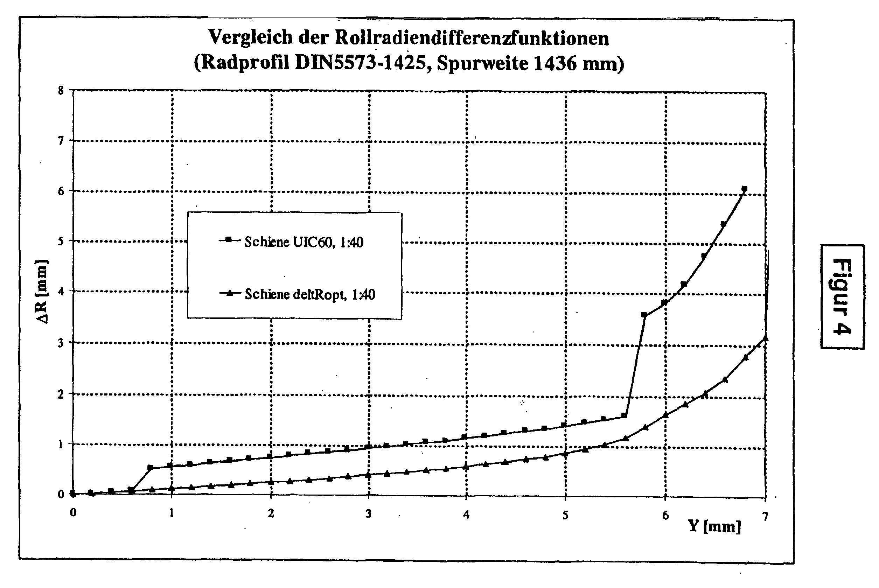

Eine geeignete Funktion, die stetig monoton steigend diese ausgewählten Punkte durchläuft und in Fig. 4 für Schiene deltRopt dargestellt ist, ergibt sich mittels Spline-Interpolation unter Vorgabe der nachfolgenden Wertepaare (y, $\Delta$r(y)):

| y | 0,0 | 0,2 | 0,4 | 0,6 | 0,8 | 1,0 | 1,2 | 1,4 | 1,6 |
|---|---|---|---|---|---|---|---|---|---|
| $\Delta$r(y) | 0,00 | 0,02 | 0,04 | 0,07 | 0,09 | 0,12 | 0,14 | 0,17 | 0,19 |
| y | 1,8 | 2,0 | 2,2 | 2,4 | 2,6 | 2,8 | 3,0 | 3,2 | 3,4 |
| $\Delta$r(y) | 0,22 | 0,25 | 0,28 | 0,31 | 0,34 | 0,37 | 0,41 | 0,44 | 0,48 |
| y | 3,6 | 3,8 | 4,0 | 4,2 | 4,4 | 4,6 | 4,8 | 5,0 | 5,2 |
| $\Delta$r(y) | 0,52 | 0,55 | 0,6 | 0,64 | 0,69 | 0,74 | 0,8 | 0,86 | 0,94 |
| y | 5,4 | 5,6 | 5,8 | 6,0 | 6,2 | 6,4 | 6,6 | 6,8 | 7,0 |
| $\Delta$r(y) | 1,03 | 1,17 | 1,38 | 1,62 | 1,84 | 2,06 | 2,34 | 2,79 | 3,17 |

Als Kontaktpartner wird wiederum das Radprofil DIN 5573 - E 1425 ausgewählt.

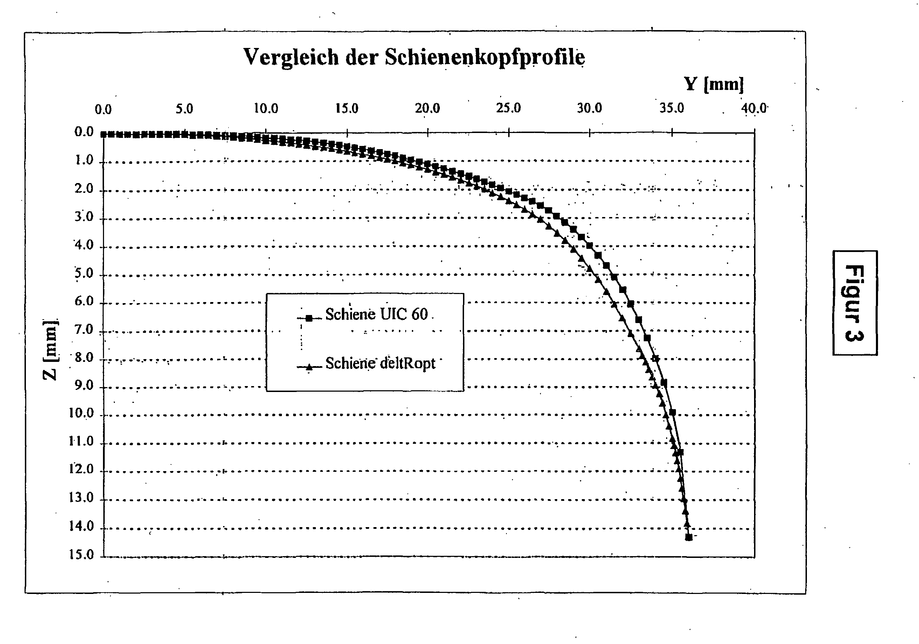

Gemäß der oben beschriebenen Vorgehensweise wird die Profilform der neuen Schiene berechnet, wobei die ermittelte Profilform anschließend entsprechend der vorgesehenen Schieneneinbauneigung 1:40 gedreht und die Kontaktfläche auf die Schienenkopfbreite von 72 mm ergänzt wurde, so daß sich die Spurweite von 1436 mm einstellt. Es ergibt sich das in Fig. 3 dargestellte symmetrische Schienenkopfquerprofil "deltRopt".

Aus Fig. 4 ist ersichtlich, daß der Berührpunkt bei dieser Form erst bei der Radsatz-Querverschiebung von ca. y$_{SP}$ = 7 mm in die Hohlkehle des Rades springt und die so erzielbare Rollradiendifferenz gegenüber der bisherigen DB-Standardprofilpaarung - Schiene UIC 60, Radprofil DIN 5573 - E 1425 - nahezu verdoppelt werden kann. Dementsprechend können engere Gleisbögen verschleißarm durchfahren werden.

Außerdem geht der Kontakt hier wie gewünscht allmählicher in den stärker gekrümmten Bereich der Schiene über als beim bekannten UIC 60-Profil, wodurch sich der vorgegebene stetige Verlauf von $\Delta$r in Abhängigkeit von der Radsatzquerauslenkung y ergibt. Dies läßt auf eine gleichmäßige Abnutzung der Schiene schließen. Die Stetigkeit zeigt sich auch bei der äquivalenten Konizität tan $\gamma_e$ in Fig. 5, wobei der gewünschte Wert tan $\gamma_e$(y$_{Amp}$=3 mm) = 0,065 ebenfalls erreicht wird. Dies führt zu ruhigem Fahrverhalten auch bei hohen Fahrgeschwindigkeiten.

Obwohl die Erfindung anhand von Ausführungsbeispielen beschrieben wurde, ist sie keineswegs auf diese beschränkt; sondern beinhaltet das, was dem Fachmann aufgrund seines Fachwissens im Rahmen der Ansprüche geläufig ist.

**Patentansprüche**

1. Kontaktflächen zwischen einer Eisenbahnschiene und einem Rad eines Radpaares (z.B. Radsatz) eines Schienenfahrzeuges, die eine stetige, im wesentlichen monoton steigende Funktion der Rollradiendifferenz $\Delta r = f(y)$ erfüllen, die die charakteristischen Punkte 0,1 mm $\leq \Delta r(y \approx y_{SP}/2) \leq 2,5$ mm, 1 mm $\leq \Delta r(y=y_{SP}) \leq 10$ mm und $\Delta r$ (y=0) = 0 durchläuft, wobei

$$\Delta r(y=y_{SP}) > 2 \cdot \Delta r(y=y_{SP}/2)$$

sowie

$\Delta r = r_1 - r_2$,
$r_1$ = im momentanen idealisierten Berührpunkt wirksamer Rollradius rechtes Rad,
$r_2$ = im momentanen idealisierten Berührpunkt wirksamer Rollradius linkes Rad,
y = Verschiebung der geometrischen Mitte des Radpaares quer zur Gleislängsachse im Bereich des Spurspiels $-y_{SP} \leq y \leq y_{SP}$.

2. Kontaktflächen nach Anspruch 1, **dadurch gekennzeichnet, daß** die stetige, im wesentlichen monoton steigende Funktion der Rollradiendifferenz $\Delta r = f(y)$ für den Einsatz im Hochgeschwindigkeitsverkehr die charakteristischen Punkte 0,1 mm $\leq \Delta r(y \approx y_{SP}/2) \leq 1,5$ mm, bevorzugt 0,2 mm $\leq \Delta r(y \approx y_{SP}/2) \leq 1,0$ mm, 1 mm $\leq \Delta r(y=y_{SP}) \leq 5$ mm, bevorzugt 2 mm $\leq \Delta r(y=y_{SP}) \leq 5$ mm und $\Delta r(y=0) = 0$ durchläuft.

3. Kontaktflächen nach Anspruch 1, **dadurch gekennzeichnet, daß** die stetige, im wesentlichen monoton steigende Funktion der Rollradiendifferenz $\Delta r = f(y)$ für den Einsatz im konventionellen Geschwindigkeitsbereich (v $\leq$ 160 km/h) mit engen Gleisbögen die charakteristischen Punkte 0,5 mm $\leq \Delta r(y \approx y_{SP}/2) \leq 2,5$ mm, bevorzugt 0,5 mm $\leq \Delta r(y \approx y_{SP}/2) \leq 2,0$ mm, 2 mm $\leq \Delta r(y=y_{SP}) \leq 10$ mm, bevorzugt 3 mm $\leq \Delta r(y=y_{SP}) \leq 10$ mm und $\Delta r(y=0) = 0$ durchläuft.

4. Kontaktflächen nach Anspruch 2, **dadurch gekennzeichnet, daß** die stetige, im wesentlichen monoton steigende Funktion der Rollradiendifferenz $\Delta r = f(y)$ für den Einsatz im Hochgeschwindigkeitsverkehr die charakteristischen Punkte $\Delta r(y=3mm) = 0,41$ mm und $\Delta r(y=7mm) = 3,17$ mm durchläuft.

5. Kontaktflächen nach zumindest einem der vorhergehenden Ansprüche, **dadurch gekennzeichnet, daß** die sich bei Nennwerten der Einbauparameter Spurmaß, Spurweite und Schieneneinbauneigung ergebenden Werte der äquivalenten Konizität bei einer Linearisierungsamplitude von $2,5 \leq y_{Amp} \leq 3,5$ mm im Bereich $0,02 \leq \tan \gamma_e(y_{Amp}) \leq 0,40$ und gleichzeitig die maximalen Rollradiendifferenzen, die vor dem Berührpunktsprung in die Spurkranzflanke aufgebaut werden können, zwischen 1 mm $\leq \Delta r_{max} \leq 10$ mm liegen.

6. Verfahren zur Herstellung von Kontaktflächen zwischen einer Eisenbahnschiene und einem Rad eines Radpaares (z.B. Radsatz) eines Schienenfahrzeuges, durch:

a) Auswahl einer beliebigen stetigen, im wesentlichen monoton steigenden Funktion der Rollradiendifferenz $\Delta r = f(y)$, die die charakteristischen Punkte 0,1 mm $\leq \Delta r(y \approx y_{SP}/2) \leq 2,5$ mm, 1 mm $\leq \Delta r(y=y_{SP}) \leq 10$ mm und $\Delta r(y=0) = 0$ durchläuft, wobei

$$\Delta r(y=y_{SP}) > 2 \cdot \Delta r(y=y_{SP}/2)$$

sowie

$\Delta r = r_1 - r_2$,
$r_1$ = im momentanen idealisierten Berührpunkt wirksamer Rollradius rechtes Rad,
$r_2$ = im momentanen idealisierten Berührpunkt wirksamer Rollradius linkes Rad,
y = Verschiebung der geometrischen Mitte des Radpaares quer zur Gleislängsachse im Bereich des Spurspiels $-y_{SP} \leq y \leq y_{SP}$;

b) Auswahl der Form eines ersten Kontaktpartnerprofils $Z_{Vorgabe} = f(Y_{Vorgabe})$;

c) Berechnen der Profilform des zweiten Kontaktpartners $Z_{berechnet} = f(Y_{berechnet})$ durch:

- Wahl von zusammengehörigen Berührpunktpaaren auf dem ersten Kontaktpartner abhängig von der Querverschiebung y, die die stetige, im wesentlichen monoton steigende Funktion der Rollradiendifferenz $\Delta r = f(y)$ erfüllen,
- Bestimmen des Verlaufs der Neigung des ersten Kontaktpartnerprofils durch Differentiation $dZ_{Vorgabe}/dY_{Vorgabe}$,
- Berechnen der Neigung $dZ_{berechnet}/dY_{berechnet}$ des zweiten Kontaktpartnerprofils in Abhängigkeit von der Querverschiebung für $-y_{Sp} \leq y \leq y_{Sp}$ gemäß den Neigungen in den gewählten idealisierten Berührpunkten, da die Neigungen beider Kontaktpartnerprofile im Berührpunkt gleich sind,
- Berechnen der Profilform des zweiten Kontaktpartners durch Integration der Neigungsfunktion des zweiten Kontaktpartners $\int \frac{dZ_{berechnet}}{dY_{berechnet}} dY_{berechnet}$ über die Breite der zweiten Kontaktfläche; und

d) Herstellen des zweiten Kontaktpartners mit Kontaktflächen gemäß der berechneten zweiten Profilform.

7. Verfahren nach Anspruch 6, **dadurch gekennzeichnet, daß** die stetige, im wesentlichen monoton steigende Funktion der Rollradiendifferenz $\Delta r = f(y)$ für den Einsatz im Hochgeschwindigkeitsverkehr die charakteristischen Punkte $0,1\ mm \leq \Delta r(y \approx y_{SP}/2) \leq 1,5\ mm$, bevorzugt $0,2\ mm \leq \Delta r(y \approx y_{SP}/2) \leq 1,0\ mm$, $1\ mm \leq \Delta r(y = y_{SP}) \leq 5\ mm$, bevorzugt $2\ mm \leq \Delta r(y = y_{SP}) \leq 5\ mm$ und $\Delta r(y=0) = 0$ durchläuft.

8. Verfahren nach Anspruch 6, **dadurch gekennzeichnet, daß** die stetige, im wesentlichen monoton steigende Funktion der Rollradiendifferenz $\Delta r = f(y)$ für den Einsatz im konventionellen Geschwindigkeitsbereich ($v \leq 160\ km/h$) mit engen Gleisbögen die charakteristischen Punkte $0,5\ mm \leq \Delta r(y \approx y_{SP}/2) \leq 2,5\ mm$, bevorzugt $0,5\ mm \leq \Delta r(y \approx y_{SP}/2) \leq 2,0\ mm$, $2\ mm \leq \Delta r(y = y_{SP}) \leq 10\ mm$, bevorzugt $3\ mm \leq \Delta r(y = y_{SP}) \leq 10\ mm$ und $\Delta r(y=0) = 0$ durchläuft.

9. Verfahren nach Anspruch 7, **dadurch gekennzeichnet, daß** die stetige, im wesentlichen monoton steigende Funktion der Rollradiendifferenz $\Delta r = f(y)$ für den Einsatz im Hochgeschwindigkeitsverkehr die charakteristischen Punkte $\Delta r(y=3mm) = 0,41\ mm$ und $\Delta r(y=7mm) = 3,17\ mm$ durchläuft.

10. Verfahren nach zumindest einem der vorhergehenden Ansprüche, **dadurch gekennzeichnet, daß** die sich bei Nennwerten der Einbauparameter Spurmaß, Spurweite und Schieneneinbauneigung ergebenden Werte der äquivalenten Konizität bei einer Linearisierungsamplitude von $2,5 \leq y_{Amp} \leq 3,5\ mm$ im Bereich $0,02 \leq \tan \gamma_e(y_{Amp}) \leq 0,40$ und gleichzeitig die maximalen Rollradiendifferenzen, die vor dem Berührpunktsprung in die Spurkranzflanke aufgebaut werden können, zwischen $1\ mm \leq \Delta r_{max} \leq 10\ mm$ liegen.

## Claims

1. Contact surfaces between a rail and a wheel of a pair of wheels (e.g. wheelset) of a rail vehicle that fulfil a continuous, essentially monotonically increasing function of the running radius difference $\Delta r = f(y)$, which passes through the characteristic points $0.1\ mm \leq \Delta r(y \approx y_{sp}/2) \leq 2.5\ mm$, $1\ mm \leq \Delta r(y = y_{sp}) \leq 10\ mm$ and $\Delta r(y=0) = 0$, in which

$$\Delta r(y = y_{sp}) > 2.\Delta r(y = y_{sp}/2)$$

and

$\Delta r = r_1 - r_2$
$r_1$ = running radius of right wheel effective in the momentarily idealised contact point
$r_2$ = running radius of left wheel effective in the momentarily idealised contact point
y = displacement of geometrical centre of the wheel pair transverse to the longitudinal axis of the track in the area of the track play $-y_{sp} \leq y \leq y_{sp}$.

2. Contact surfaces according to claim 1, **characterized in that** the continuous, essentially monotonically increasing function of the running radius difference $\Delta r = f(y)$ for use in high-speed traffic passes through the characteristic points $0.1\ mm \leq \Delta r(y \approx y_{sp}/2) \leq 1.5\ mm$, preferably $0.2\ mm \leq \Delta r(y \approx y_{sp}/2) \leq 1.0\ mm$, $1\ mm \leq \Delta r(y = y_{sp}) \leq 5\ mm$, preferably $2\ mm \leq \Delta r(y = y_{sp}/2) \leq 5\ mm$, and $\Delta r(y=0) = 0$.

3. Contact surfaces according to claim 1, **characterized in that** the continuous, essentially monotonically increasing function of the running radius difference $\Delta r = f(y)$ for use in the conventional speed range ($v \leq 160$ km/h) with narrow track curves passes through the characteristic points $0.5$ mm $\leq \Delta r(y \approx y_{sp}/2) \leq 2.5$ mm, preferably $0.5$ mm $\leq \Delta r(y \approx y_{sp}/2) \leq 2.0$ mm, $2$ mm $\leq \Delta r(y=y_{sp}) \leq 10$ mm, preferably $3$ mm $\leq \Delta r(y=y_{sp}) \leq 10$ mm, and $\Delta r(y=0) = 0$.

4. Contact surfaces according to claim 2, **characterized in that** the continuous, essentially monotonically increasing function of the running radius difference $\Delta r = f(y)$ for use in high-speed traffic passes through the characteristic points $\Delta r(y=3mm) = 0.41$ mm and $\Delta r(y=7mm) = 3.17$ mm.

5. Contact surfaces according to at least one of the preceding claims, **characterized in that** the values of equivalent conicity yielded at nominal values of the installation parameters track dimension, track width and rail installation inclination, at a linearisation amplitude of $2.5 \leq y_{amp} \leq 3.5$ mm in the range $0.02 \leq \tan \gamma e(y_{amp}) \leq 0.40$, and at the same time the maximum running radius differences that can be built up prior to the contact point jump into the wheel flange flank, lie between $1$ mm $\leq \Delta r_{max} \leq 10$ mm.

6. Method for producing contact surfaces between a rail and a wheel of a pair of wheels (e.g. wheelset) of a rail vehicle, by:

   a) selecting any continuous, essentially monotonically increasing function of the running radius difference $\Delta r = f(y)$, that passes through the characteristic points $0.1$ mm $\leq \Delta r(y \approx y_{sp}/2) \leq 2.5$ mm, $1$ mm $\leq \Delta r(y=y_{sp}) \leq 10$ mm and $\Delta r(y=0) = 0$, in which

   $$\Delta r(y=y_{sp}) > 2.\Delta r(y=y_{sp}/2)$$

   and

   $\Delta r = r_1 - r_2$
   $r_1$ = running radius of right wheel effective in the momentarily idealised contact point
   $r_2$ = running radius of left wheel effective in the momentarily idealised contact point
   $y$ = displacement of geometrical centre of the wheel pair transverse to the longitudinal axis of the track in the area of the track play $-y_{sp} \leq y \leq y_{sp}$;

   b) selecting the shape of a first contact partner profile $Z_{default} = f(Y_{default})$ ;

   c) calculating the profile shape of the second contact partner $Z_{calculated} = f(Y_{calculated})$ by:

   Selecting related contact point pairs on the first contact partner depending on the lateral displacement $y$ that fulfil the continuous, essentially monotonically increasing function of the running radius difference $\Delta r = f(y)$,
   Determining the curve of the inclination of the first contact partner profile by differentiation $dZ_{default}/dY_{default}$,
   Calculating the inclination $dZ_{calculated}/dY_{calculated}$ of the second contact partner profile depending on the lateral displacement for $-y_{sp} \leq y \leq y_{sp}$ according to the inclinations in the selected idealised contact points, as the inclinations of both contact partner profiles are identical in the contact point,
   Calculating the profile shape of the second contact partner by integration of the inclination function of the second contact partner

   $$\int \frac{dZ_{calc.}}{dY_{calc.}} dY_{calc.} .$$

   over the width of the second contact surface; and

   d) producing the second contact partner with contact surfaces according to the calculated second profile shape.

7. Method according to claim 6, **characterized in that** the continuous, essentially monotonically increasing function of the running radius difference $\Delta r = f(y)$ for use in high-speed traffic passes through the characteristic points $0.1$

mm $\leq \Delta r(y \approx y_{sp}/2) \leq 1.5$ mm, preferably 0.2 mm $\leq \Delta r(y \approx y_{sp}/2) \leq 1.0$ mm, 1 mm $\leq \Delta r(y=y_{sp}) \leq 5$ mm, preferably 2 mm $\leq \Delta r(y=y_{sp}) \leq 5$ mm, and $\Delta r(y=0) = 0$.

8.  Method according to claim 6, **characterized in that** the continuous, essentially monotonically increasing function of the running radius difference $\Delta r = f(y)$ for use in the conventional speed range ($v \leq 160$ km/h) with narrow track curves passes through the characteristic points 0.5 mm $\leq \Delta r(y \approx y_{sp}/2) \leq 2.5$ mm, preferably 0.5 mm $\leq \Delta r(y \approx y_{sp}/2) \leq 2.0$ mm, 2 mm $\leq \Delta r(y=y_{sp}) \leq 10$ mm, preferably 3 mm $\leq \Delta r(y=y_{sp}) \leq 10$ mm, and $\Delta r(y=0) = 0$.

9.  Method according to claim 7, **characterized in that** the continuous, essentially monotonically increasing function of the running radius difference $\Delta r = f(y)$ for use in high-speed traffic passes through the characteristic points $\Delta r(y=3mm) = 0.41$ mm and $\Delta r(y=7mm) = 3.17$ mm.

10. Method according to at least one of the preceding claims, **characterized in that** the values of equivalent conicity yielded at nominal values of the installation parameters track dimension, track width and rail installation inclination, at a linearisation amplitude of $2.5 \leq y_{amp} \leq 3.5$ mm in the range $0.02 \leq \tan \gamma e(y_{amp}) \leq 0.40$ and at the same time the maximum running radius differences that can be built up prior to the contact point jump into the wheel flange flank, lie between 1 mm $\leq \Delta r_{max} \leq 10$ mm.

**Revendications**

1.  Surfaces de contact entre un rail de chemin de fer et une roue d'une paire de roues (ex. essieu monté) d'un véhicule ferroviaire, lesquelles répondent à une fonction constante, à croissance sensiblement monotone, de la différence de rayon de roulement $\Delta r = f(y)$, qui passe par les points caractéristiques 0,1 mm $\leq \Delta r(y \approx y_{SP}/2) \leq 2,5$ mm, 1 mm $\leq \Delta r(y=y_{SP}) \leq 10$ mm et $\Delta r(y=0)$, sachant que

$$\Delta r(y=y_{SP}) > 2 \cdot \Delta r(y=y_{SP}/2)$$

ainsi que

$\Delta r = r_1 - r_2$,
$r_1$ = rayon de roulement effectif de la roue droite au point de contact instantané idéalisé,
$r_2$ = rayon de roulement effectif de la roue gauche au point de contact instantané idéalisé,
$y$ = déplacement du milieu géométrique de la paire de roues transversalement à l'axe longitudinal de la voie dans la plage des tolérances de la voie $-y_{SP} \leq y \leq y_{SP}$.

2.  Surfaces de contact selon la revendication 1, **caractérisées en ce que** la fonction constante, à croissance sensiblement monotone, de la différence de rayon de roulement $\Delta r = f(y)$ pour la mise en oeuvre en service à grande vitesse passe par les points caractéristiques 0,1 mm $\leq \Delta r(y \approx y_{SP}/2) \leq 1,5$ mm, de préférence 0,2 mm $\leq \Delta r(y \approx y_{SP}/2) \leq 1,0$ mm, 1 mm $\leq \Delta r(y=y_{SP}) \leq 5$ mm, de préférence 2 mm $\leq \Delta r(y=y_{SP}) \leq 5$ mm et $\Delta r(y=0) = 0$.

3.  Surfaces de contact selon la revendication 1, **caractérisées en ce que** la fonction constante, à croissance sensiblement monotone, de la différence de rayon de roulement $\Delta r = f(y)$ pour la mise en oeuvre dans la plage de vitesses conventionnelle ($v \leq 160$ km/h) avec des courbures de voie serrées passe par les points caractéristiques 0,5 mm $\leq \Delta r(y \approx y_{SP}/2) \leq 2,5$ mm, de préférence 0,5 mm $\leq \Delta r(y \approx y_{SP}/2) \leq 2,0$ mm, 2 mm $\leq \Delta r(y=y_{SP}) \leq 10$ mm, de préférence 3 mm $\leq \Delta r(y=y_{SP}) \leq 10$ mm et $\Delta r(y=0) = 0$.

4.  Surfaces de contact selon la revendication 2, **caractérisées en ce que** la fonction constante, à croissance sensiblement monotone, de la différence de rayon de roulement $\Delta r = f(y)$ pour la mise en oeuvre en service à grande vitesse passe par les points caractéristiques $\Delta r(y=3mm) = 0,41$ mm et $\Delta r(y=7mm) = 3,17$ mm.

5.  Surfaces de contact selon au moins une des revendications précédentes, **caractérisées en ce que** les valeurs de conicité équivalente obtenues aux valeurs nominales des paramètres d'installation que sont la dimension de la voie, la largeur de voie et l'inclinaison de pose des rails dans le cas d'une amplitude de linéarisation de $2,5 \leq y_{amp} \leq 3,5$ mm se situent dans la plage de $0,02 \leq \tan \gamma_e(y_{amp}) \leq 0,40$ et, dans le même temps, les différences maximales de rayon de roulement qui peuvent s'établir avant le passage du point de contact dans le flanc du boudin de roue sont comprises entre 1 mm $\leq \Delta r_{max} \leq 10$ mm.

**6.** Procédé de fabrication de surfaces de contact entre un rail de chemin de fer et une roue d'une paire de roues (ex. essieu monté) d'un véhicule ferroviaire, par :

a) le choix d'une fonction constante quelconque, à croissance sensiblement monotone, de la différence de rayon de roulement $\Delta r = f(y)$ qui passe par les points caractéristiques 0,1 mm $\le \Delta r(y \approx y_{SP}/2) \le$ 2,5 mm, 1 mm $\le \Delta r(y=y_{SP}) \le$ 10 mm et $\Delta r(y=0)$, sachant que

$$\Delta r(y=y_{SP}) > 2 \cdot \Delta r(y=y_{SP}/2)$$

ainsi que

$\Delta r = r_1 - r_2$,
$r_1$ = rayon de roulement effectif de la roue droite au point de contact instantané idéalisé,
$r_2$ = rayon de roulement effectif de la roue gauche au point de contact instantané idéalisé,
y = déplacement du milieu géométrique de la paire de roues transversalement à l'axe longitudinal de la voie dans la plage des tolérances de la voie $-y_{SP} \le y \le y_{SP}$

b) le choix de la forme d'un premier profil contactant $Z_{consigne} = f(Y_{consigne})$ ;

c) le calcul de la forme du profil du second contactant $Z_{calculé} = f(Y_{calculé})$ par :

- le choix de paires de points de contact correspondantes sur le premier contactant en fonction du déplacement transversal y, lesquelles répondent à la fonction constante, à croissance sensiblement monotone, de la différence de rayon de roulement $\Delta r = f(y)$,
- la détermination de la variation d'inclinaison du premier profil contactant par différenciation $dZ_{consigne}/dY_{consigne}$ ;
- le calcul de l'inclinaison $dZ_{calculé}/dY_{calculé}$ du second profil contactant en fonction du déplacement transversal pour $-y_{SP} \le y \le y_{SP}$ conformément aux inclinaisons aux points de contact idéalisés choisis car les inclinaisons des deux profils contactants au point de contact sont identiques,
- le calcul de la forme du profil du second contactant par intégration de la fonction d'inclinaison du second contactant $\int dZ_{calculé}/dY_{calculé} \cdot dY_{calculé}$ sur la largeur de la seconde surface de contact ; et

d) la fabrication du second contactant avec des surfaces de contact conformes à la seconde forme de profil calculée.

**7.** Procédé selon la revendication 6, **caractérisé en ce que** la fonction constante, à croissance sensiblement monotone, de la différence de rayon de roulement $\Delta r = f(y)$ pour la mise en oeuvre en service à grande vitesse passe par les points caractéristiques 0,1 mm $\le \Delta r(y \approx y_{SP}/2) \le$ 1,5 mm, de préférence 0,2 mm $\le \Delta r(y \approx y_{SP}/2) \le$ 1,0 mm, 1 mm $\le \Delta r(y=y_{SP}) \le$ 5 mm, de préférence 2 mm $\le \Delta r(y=y_{SP}) \le$ 5 mm et $\Delta r(y=0) = 0$.

**8.** Procédé selon la revendication 6, **caractérisé en ce que** la fonction constante, à croissance sensiblement monotone, de la différence de rayon de roulement $\Delta r = f(y)$ pour la mise en oeuvre dans la plage de vitesses conventionnelle (v $\le$ 160 km/h) avec des courbures de voie serrées passe par les points caractéristiques 0,5 mm $\le \Delta r(y \approx y_{SP}/2) \le$ 2,5 mm, de préférence 0,5 mm $\le \Delta r(y \approx y_{SP}/2) \le$ 2,0 mm, 2 mm $\le \Delta r(y=y_{SP}) \le$ 10 mm, de préférence 3 mm $\le \Delta r(y=y_{SP}) \le$ 10 mm et $\Delta r(y=0) = 0$.

**9.** Procédé selon la revendication 7, **caractérisé en ce que** la fonction constante, à croissance sensiblement monotone, de la différence de rayon de roulement $\Delta r = f(y)$ pour la mise en oeuvre en service à grande vitesse passe par les points caractéristiques $\Delta r(y=3mm) = 0,41$ mm et $\Delta r(y=7mm) = 3,17$ mm.

**10.** Procédé selon au moins une des revendications précédentes, **caractérisé en ce que** les valeurs de conicité équivalente obtenues aux valeurs nominales des paramètres d'installation que sont la dimension de la voie, la largeur de voie et l'inclinaison de pose des rails dans le cas d'une amplitude de linéarisation de 2,5 $\le y_{amp} \le$ 3,5 mm se situent dans la plage de 0,02 $\le \tan \gamma_e(y_{amp}) \le$ 0,40 et, dans le même temps, les différences maximales de rayon de roulement qui peuvent s'établir avant le passage du point de contact dans le flanc du boudin de roue sont comprises entre 1 mm $\le \Delta r_{max} \le$ 10 mm.

## Figur 1a

**Rollradiendifferenzfunktion**

**Funktion der äquivalenten Konizität**

(Bsp.: Radprofil DIN 5573-1425, Schienenprofil UIC 60, SN=1:40, SW=1436 mm)

## Figur 1b

## Veranschaulichung am kinematischen Rollkegel

$$\frac{R+b_A}{r_1} = \frac{R-b_A}{r_2} \xrightarrow{\Delta r = r_1 - r_2,\ r_0 = \frac{r_1 + r_2}{2}} R_{min} = \frac{2\,r_0\,b_A}{\Delta r_{max}}$$

### Rollradiendifferenzfunktion

(Bsp.: Radprofil DIN 5573-1425, Schienenprofil UIC 60, SN=1:40, SW=1436 mm)

Figur 2

Grundlegender Zusammenhang zwischen Profilform, Profilneigung und Berührpunktslage

Figur 3

Vergleich der Rollradiendifferenzfunktionen
(Radprofil DIN5573-1425, Spurweite 1436 mm)

Schiene UIC60, 1:40

Schiene deltRopt, 1:40

ΔR [mm]

Y [mm]

EP 1 091 044 B1

Figur 4

## Figur 5

Vergleich der Verläufe der äquivalenten Konizität
(Radprofil DIN5573-1425, Spurweite 1436 mm)

Figur 6